# EUROPEAN PATENT APPLICATION

(11) **EP 4 726 866 A1**
(43) Date of publication of application: **15.04.2026**
(21) Application number: 24856666.3
(22) Date of filing: 23.07.2024
(51) Int. Cl.: H01M 50/105, H01M 50/183

(54) **SEALING DEVICE FOR POUCH TYPE SECONDARY BATTERY CASE, AND SEALING METHOD USING SAME**

(30) Priority: 24.08.2023 KR 20230111422
(71) Applicant: LG Energy Solution, Ltd., Seoul 07335 (KR)
(72) Inventor: KWON, Myung Bin, Daejeon 34122 (KR)
(74) Representative: Goddar, Heinz J.
(86) International application number: PCT/KR2024/010587
(87) International publication number: WO 2025/042053

(57) **Abstract**

Disclosed are an apparatus for sealing a pouch-shaped secondary battery case, the apparatus including a sealing tool including an upper sealing tool and a lower sealing tool configured to be disposed in contact with each other in the state in which a sealed portion of the pouch-shaped secondary battery case is located therebetween in order to press and heat the sealed portion such that the sealed portion is sealed, an upper pressing unit located in front or at the rear of the upper sealing tool, and a lower pressing unit located in front or at the rear of the lower sealing tool, and a sealing method using the same.

## Description

### [Technical Field]

This application claims the benefit of priority to Korean Patent Application No. 2023-0111422 filed on August 24, 2023, the disclosure of which is incorporated herein by reference in its entirety.

The present invention relates to an apparatus for sealing a pouch-shaped secondary battery case and a sealing method using the same, and more particularly to an apparatus for sealing a pouch-shaped secondary battery case capable of reducing the risk of wrinkling of a sealed portion by pressing the sealed portion first using a pressing unit during a process of sealing the pouch-shaped secondary battery case and a sealing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, or a pouch-shaped battery having an electrode assembly mounted in a pouch-shaped case made of an aluminum laminate sheet.

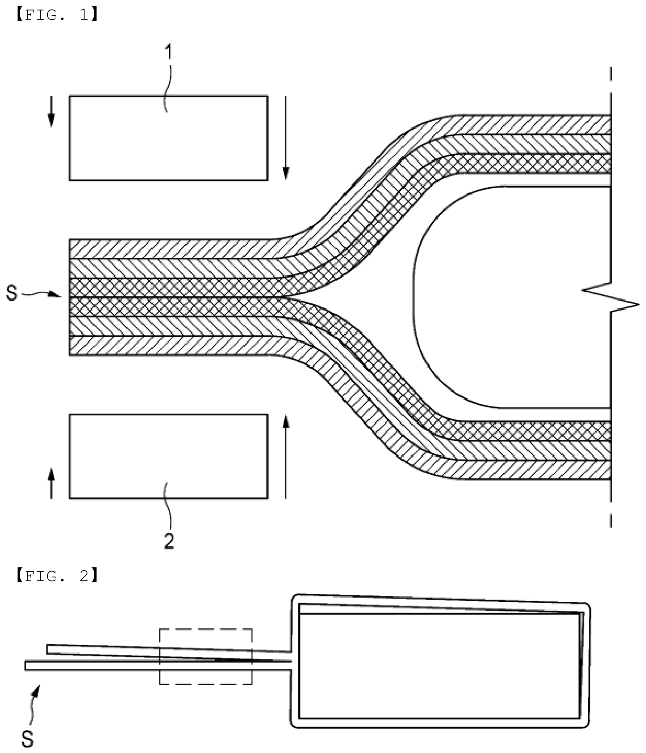

FIG. 1 is a view showing that a conventional apparatus for sealing a pouch-shaped secondary battery case seals a secondary battery, and FIG. 2 is a view showing the state of a conventional pouch-shaped secondary battery case before being sealed.

Referring first to FIG. 1, an upper jig 1 and a lower jig 2 are located above and under a sealed portion S of the case, respectively, and are moved in directions facing each other. Subsequently, predetermined pressure and heat are applied to the sealed portion S such that the sealed portion is fused.

However, as shown in FIG. 2, when an upper case and a lower case constituting the sealed portion S are spaced apart from each other, i.e., there is a gap therebetween, sealing may cause wrinkles in the sealed portion.

During sealing, the upper jig and the lower jig are heated to a certain temperature, and therefore the upper case and the lower case are pressed while heat is transmitted thereto in the state in which the upper case and the lower case are spaced apart from each other, whereby, wrinkles are prone to occur in the sealed portion.

### (Prior Art Document)

(Patent Document 1) Korean Patent Application Publication No. 10-2015-0137742

### [Disclosure]

### [Technical Problem]

The present invention has been made in view of the above problems, and it is an object of the present invention to provide an apparatus for sealing a pouch-shaped secondary battery case capable of preventing or minimizing wrinkles from occurring in a sealed portion of the pouch-shaped secondary battery case and a sealing method using the same.

### [Technical Solution]

As a technical means for achieving the above object, an apparatus for sealing a pouch-shaped secondary battery case according to an embodiment of the present invention includes a sealing tool (100) including an upper sealing tool (110) and a lower sealing tool (120) configured to be disposed in contact with each other in the state in which a sealed portion (11a) of the pouch-shaped secondary battery case is located therebetween in order to press and heat the sealed portion (11a) such that the sealed portion is sealed, an upper pressing unit (200) located in front or at the rear of the upper sealing tool (110), and a lower pressing unit (300) located in front or at the rear of the lower sealing tool (120) .

Also, in the apparatus for sealing the pouch-shaped secondary battery case according to the present invention, the upper pressing unit (200) may include a first upper pressing member (210) located in front of the upper sealing tool (110), the first upper pressing member being configured to press the sealed portion (11a) ahead of the upper sealing tool (110) when the upper sealing tool (110) is moved downward.

Also, in the apparatus for sealing the pouch-shaped secondary battery case according to the present invention, the lower pressing unit (300) may include a first lower pressing member (310) located in front of the lower sealing tool (120), the first lower pressing member being configured to press the sealed portion (11a) ahead of the lower sealing tool (120) when the lower sealing tool (120) is moved upward.

Also, in the apparatus for sealing the pouch-shaped secondary battery case according to the present invention, the upper pressing unit (200) may include a second upper pressing member (220) located at the rear of the upper sealing tool (110), the second upper pressing member being configured to press the sealed portion (11a) ahead of the upper sealing tool (110) when the upper sealing tool (110) is moved downward, and the lower pressing unit (300) may include a second lower pressing member (320) located at the rear of the lower sealing tool (120), the second lower pressing member being configured to press the sealed portion (11a) ahead of the lower sealing tool (120) when the lower sealing tool (120) is moved upward.

Also, the apparatus for sealing the pouch-shaped secondary battery case according to the present invention may further include an air blowing unit configured to blow air toward the sealed portion (11a), wherein the first upper pressing member (210) may include a first passage (212) configured to allow air blown from the air blowing unit to pass therethrough, and the first lower pressing member (310) may include a third passage (312) configured to allow air blown from the air blowing unit to pass therethrough.

Also, the apparatus for sealing the pouch-shaped secondary battery case according to the present invention may further include an air blowing unit configured to blow air toward the sealed portion (11a), wherein the second upper pressing member (220) may include a second passage (222) configured to allow air blown from the air blowing unit to pass therethrough, and the second lower pressing member (320) may include a fourth passage (322) configured to allow air blown from the air blowing unit to pass therethrough.

Also, in the apparatus for sealing the pouch-shaped secondary battery case according to the present invention, the sealing tool (100) may include an upper elastic unit (130) constituted by a first elastic member (131) interposed between the upper sealing tool (110) and the first upper pressing member (210) or a second elastic member (132) interposed between the upper sealing tool (110) and the second upper pressing member (220).

Also, in the apparatus for sealing the pouch-shaped secondary battery case according to the present invention, the upper elastic unit (130) may be configured to apply an elastic restoring force between the upper sealing tool (110) and the upper pressing unit (200) when a lower surface of the upper sealing tool (110) is moved to the position corresponding to a lower surface of the upper pressing unit (200) in an initial state in which the lower surface of the upper sealing tool (110) is located higher than the lower surface of the upper pressing unit (200).

Also, in the apparatus for sealing the pouch-shaped secondary battery case according to the present invention, the sealing tool (100) may include a lower elastic unit (140) constituted by a third elastic member (141) interposed between the lower sealing tool (120) and the first lower pressing member (310) or a fourth elastic member (142) interposed between the lower sealing tool (120) and the second lower pressing member (320).

Also, in the apparatus for sealing the pouch-shaped secondary battery case according to the present invention, the lower elastic unit (140) may be configured to apply an elastic restoring force between the lower sealing tool (120) and the lower pressing unit (300) when an upper surface of the lower sealing tool (120) is moved to the position corresponding to an upper surface of the lower pressing unit (300) in an initial state in which the upper surface of the lower sealing tool (120) is located lower than the upper surface of the lower pressing unit (300).

In addition, a method of sealing a pouch-shaped secondary battery case using the sealing apparatus according to the embodiment of the present invention includes (S1) locating a sealed portion (11a) of the pouch-shaped secondary battery case between the upper sealing tool (110) and the lower sealing tool (120), (S2) moving the upper sealing tool (110) and the lower sealing tool (120) in directions facing each other, (S3) pressing the sealed portion (11a) using the upper pressing unit (200) provided at the upper sealing tool (110) and the lower pressing unit (300) provided at the lower sealing tool (120), and (S4) pressing and heating the sealed portion (11a) to seal the sealed portion using the upper sealing tool (110) and the lower sealing tool (120).

Also, the method of sealing the pouch-shaped secondary battery case according to the present invention may further include (S5) moving the upper sealing tool (110) and the lower sealing tool (120) to initial positions thereof after step S4.

Also, in the method of sealing the pouch-shaped secondary battery case according to the present invention, in step S5, the upper pressing unit (200) may be moved to the initial position thereof by an elastic restoring force of the upper elastic unit (130) interposed between the upper sealing tool (110) and the upper pressing unit (200), and the lower pressing unit (300) may be moved to the initial position thereof by an elastic restoring force of the lower elastic unit (140) interposed between the lower sealing tool (120) and the lower pressing unit (300).

Also, the method of sealing the pouch-shaped secondary battery case according to the present invention may further include blowing air toward the sealed portion (11a) through the passage formed in the upper pressing unit (200) or the lower pressing unit (300) between step S1 and step S2.

Also, the method of sealing the pouch-shaped secondary battery case according to the present invention may further include blowing air toward the sealed portion (11a) through the passage formed in the upper pressing unit (200) or the lower pressing unit (300) between step S2 and step S3.

### [Advantageous Effects]

As is apparent from the above description, an apparatus and method for sealing a pouch-shaped secondary battery case according to the present invention have the advantage that, since an upper sealing tool is provided with an upper pressing unit and a lower sealing tool with a lower pressing unit, the upper pressing unit and the lower pressing unit press a sealed portion ahead of the sealing tool during a sealing process, such that the sealing process is carried out in the state in which the sealed portion is closed, whereby it is possible to reduce the risk of wrinkling of the sealed portion.

In addition, the apparatus and method for sealing the pouch-shaped secondary battery case according to the present invention have the advantage that, since each of the upper pressing unit and the lower pressing unit is provided with a passage through which air supplied from an air blowing unit passes, air may be blown toward the sealed portion before the upper pressing unit and the lower pressing unit press the sealed portion, whereby it is possible not only to inhibit the occurrence of wrinkles but also to remove foreign matter from the sealed portion.

### [Description of Drawings]

FIG. 1 is a view showing that a conventional apparatus for sealing a pouch-shaped secondary battery case seals a secondary battery.
FIG. 2 is a view showing the state of a conventional pouch-shaped secondary battery case before being sealed.
FIG. 3 is a conceptual view illustrating an apparatus for sealing a pouch-shaped secondary battery case according to a first embodiment of the present invention.
FIG. 4 is a perspective view illustrating an upper sealing tool and a first upper pressing member in the apparatus for sealing the pouch-shaped secondary battery case according to the first embodiment of the present invention.
FIG. 5 is a perspective view illustrating the upper sealing tool and a second upper pressing member in the apparatus for sealing the pouch-shaped secondary battery case according to the first embodiment of the present invention.
FIG. 6 is a perspective view illustrating a lower sealing tool and a first lower pressing member in the apparatus for sealing the pouch-shaped secondary battery case according to the first embodiment of the present invention.
FIG. 7 is a perspective view illustrating the lower sealing tool and a second lower pressing member in the apparatus for sealing the pouch-shaped secondary battery case according to the first embodiment of the present invention.
FIG. 8 is a schematic flowchart illustrating the operation during a sealing process of the apparatus for sealing the pouch-shaped secondary battery case according to the first embodiment of the present invention.
FIG. 9 is a conceptual view illustrating an apparatus for sealing a pouch-shaped secondary battery case according to a second embodiment of the present invention.
FIG. 10 is a perspective view illustrating an upper sealing tool and a first upper pressing member in the apparatus for sealing the pouch-shaped secondary battery case according to the second embodiment of the present invention.
FIG. 11 is a schematic flowchart illustrating the operation during a sealing process of the apparatus for sealing the pouch-shaped secondary battery case according to the second embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an apparatus for sealing a pouch-shaped secondary battery case according to the present invention and a sealing method using the same will be described.

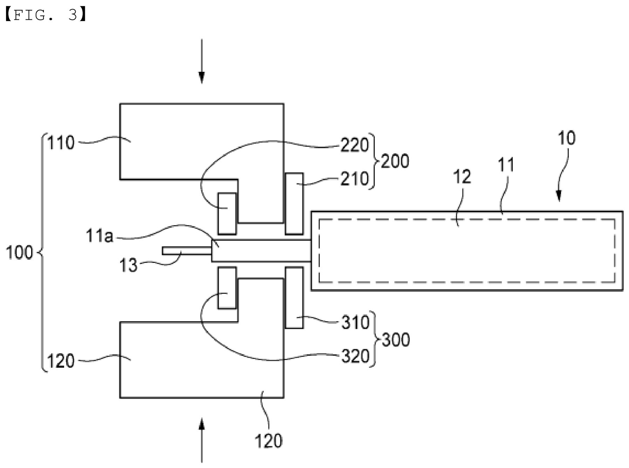

FIG. 3 is a conceptual view illustrating an apparatus for sealing a pouch-shaped secondary battery case according to a first embodiment of the present invention.

Referring to FIG. 3, the apparatus for sealing the pouch-shaped secondary battery case according to the present invention includes a sealing tool 100, an upper pressing unit 200, and a lower pressing unit 300.

First, for a secondary battery 10, an electrode assembly 12 is received in a battery case 11, and a sealed portion 11a is thermally fused and sealed by the sealing tool 100 in the state in which an electrode lead 13 is exposed out of the sealed portion 11a.

The sealing tool 100 may include an upper sealing tool 110 and a lower sealing tool 120 disposed in contact with each other in the state in which the sealed portion 11a of the pouch-shaped secondary battery case is located therebetween in order to press and heat the sealed portion 11a such that the sealed portion is sealed. For example, the upper sealing tool 110 may be located at an upper side of the sealed portion 11a that is disposed, and the lower sealing tool 120 may be located at a lower side of the sealed portion 11a.

When the upper side is defined as 12 o'clock direction and the lower side is defined as 6 o'clock direction in FIG. 3, the upper sealing tool 110 may be moved downward from the upper side (from 12 o'clock direction to 6 o'clock direction) to press from the upper side of the sealed portion 11a in a downward direction, and the lower sealing tool 120 may be moved upward from the lower side (from 6 o'clock direction to 12 o'clock direction) to press from the lower side of the sealed portion 11a in an upward direction.

That is, pressure and heat may be applied to the sealed portion 11a downward and upward by the downward movement driving of the upper sealing tool 110 and the upward movement driving of the lower sealing tool 120, respectively, whereby the sealed portion may be sealed.

In the sealing apparatus according to the present invention, the upper sealing tool 110 and the lower sealing tool 120 are obvious to those skilled in the art, and therefore a more detailed description thereof will be omitted.

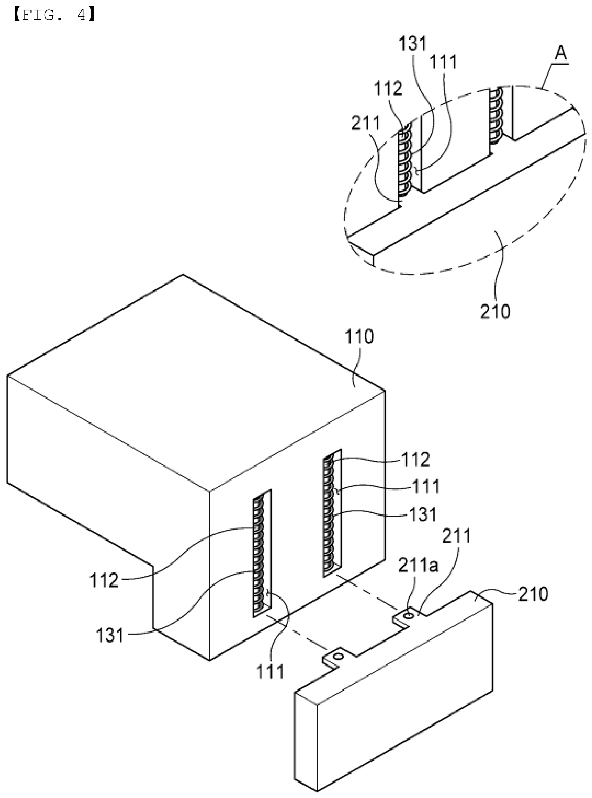

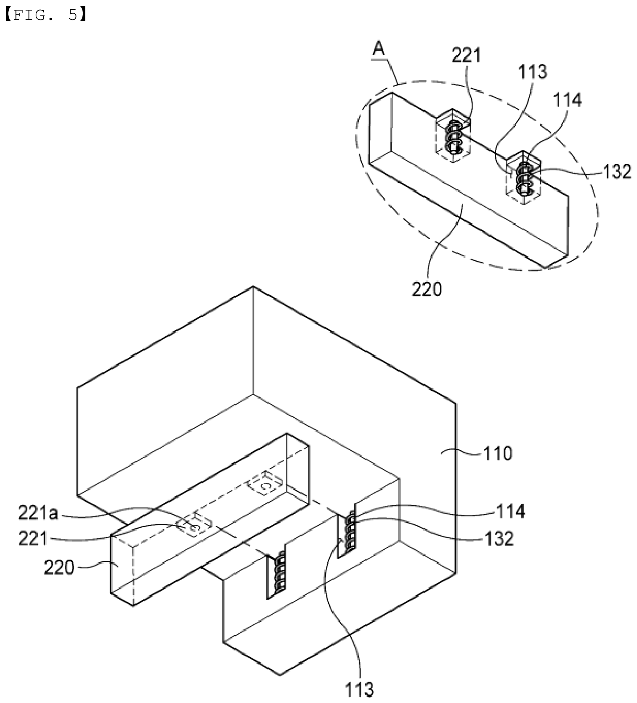

FIG. 4 is a perspective view illustrating the upper sealing tool and a first upper pressing member in the apparatus for sealing the pouch-shaped secondary battery case according to the first embodiment of the present invention, and FIG. 5 is a perspective view illustrating the upper sealing tool and a second upper pressing member in the apparatus for sealing the pouch-shaped secondary battery case according to the first embodiment of the present invention.

Referring to FIGs. 3 to 5, the upper pressing unit 200 may be located in front or at the rear of the upper sealing tool 110.

When the front is defined as 3 o'clock direction and the rear is defined as 9 o'clock direction in FIG. 3, the upper pressing unit 200 may include a first upper pressing member 210 located in front of the upper sealing tool 110 and a second upper pressing member 220 located at the rear of the upper sealing tool 110.

First, the first upper pressing member 210 is connected to the front of the upper sealing tool 110, and may be configured to press the sealed portion 11a ahead of the upper sealing tool 110 when the upper sealing tool 110 is moved downward. For example, the first upper pressing member 210 may be configured such that a lower surface of the first upper pressing member 210 is located lower than a lower surface of the upper sealing tool 110. In other words, the lower surface of the first upper pressing member 210 may be located closer to an upper surface of the sealed portion 11a than the lower surface of the upper sealing tool 110.

In addition, the upper sealing tool 110 may include a first space portion 111 and a first guide rod 112. For example, the first space portion 111 may be a groove formed in a front surface of the upper sealing tool 110 in an upward-downward direction. Illustratively, the first guide rod 112 may be disposed in the first space portion 111 so as to extend in the upward-downward direction, and may be configured as a straight member. For example, the first guide rod 112 may be in the form of a straight rod or bar.

Meanwhile, the first upper pressing member 210 may include a first extension piece 211. For example, the first extension piece 211 may be formed as the result of a part of an upper surface of the first upper pressing member 210 protruding and extending rearward, and the first extension piece 211 may be provided with a first hole 211a having a size that allows the first guide rod 112 of the upper sealing tool 110 to extend therethrough.

In addition, the first extension piece 211 of the first upper pressing member 210 may be configured to have a size that can be inserted into the first space portion 111 of the upper sealing tool 110. In addition, the first extension piece 211 of the first upper pressing member 210 and the first space portion 111 of the upper sealing tool 110 may be provided at positions corresponding to each other, and accordingly, the first guide rod 112 and the first hole 211a may also be provided at positions corresponding to each other.

In addition, the first hole 211a of the first upper pressing member 210 may be linearly movably engaged with or male-female coupled to the first guide rod 112 of the upper sealing tool 110. Accordingly, the first upper pressing member 210 may be reciprocated within a linear movement section guided by the first guide rod 112.

In addition, the sealing tool 100 may include an upper elastic unit 130, wherein the upper elastic unit 130 may include a first elastic member 131 interposed between the upper sealing tool 110 and the first upper pressing member 210. For example, the first elastic member 131 may be a spring member; however, the present invention is not limited thereto.

Illustratively, the first elastic member 131 may be provided relative to the first guide rod 112. For example, the first elastic member 131 may be configured to wrap around the first guide rod 112 to apply elastic restoring force to the first upper pressing member 210 that is linearly moved along the first guide rod 112. This will be described in more detail later.

Next, the second upper pressing member 220 is connected to the rear of the upper sealing tool 110, and may be configured to press the sealed portion 11a ahead of the upper sealing tool 110 when the upper sealing tool 110 is moved downward. For example, the second upper pressing member 220 may be configured such that a lower surface of the second upper pressing member 220 is lower than the lower surface of the upper sealing tool 110. In other words, the lower surface of the second upper pressing member 220 may be located closer to the upper surface of the sealed portion 11a than the lower surface of the upper sealing tool 110.

In addition, the upper sealing tool 110 may include a second space portion 113 and a second guide rod 114. For example, the second space portion 113 may be a groove formed in a rear surface of the upper sealing tool 110 in the upward-downward direction. Illustratively, the second guide rod 114 may be disposed in the second space portion 113 so as to extend in the upward-downward direction, and may be configured as a straight member. For example, the second guide rod 114 may be in the form of a straight rod or bar.

Meanwhile, the second upper pressing member 220 may include a second extension piece 221. For example, the second extension piece 221 may be formed as the result of a part of an upper surface of the second upper pressing member 220 protruding and extending forward, and the second extension piece 221 may be provided with a second hole 221a having a size that allows the second guide rod 114 of the upper sealing tool 110 to extend therethrough.

In addition, the second extension piece 221 of the second upper pressing member 220 may be configured to have a size that can be inserted into the second space portion 113 of the upper sealing tool 110. In addition, the second extension piece 221 of the second upper pressing member 220 and the second space portion 113 of the upper sealing tool 110 may be provided at positions corresponding to each other, and accordingly, the second guide rod 114 and the second hole 221a may also be provided at positions corresponding to each other.

In addition, the second hole 221a of the second upper pressing member 220 may be linearly movably engaged with or male-female coupled to the second guide rod 114 of the upper sealing tool 110. Accordingly, the second upper pressing member 220 may be reciprocated within a linear movement section guided by the second guide rod 114.

In addition, the upper elastic unit 130 may include a second elastic member 132 interposed between the upper sealing tool 110 and the second upper pressing member 220. For example, the second elastic member 132 may be a spring member; however, the present invention is not limited thereto.

Illustratively, the second elastic member 132 may be provided relative to the second guide rod 114. For example, the second elastic member 132 may be configured to wrap around the second guide rod 114 to apply elastic restoring force to the second upper pressing member 220 that is linearly moved along the second guide rod 114. This will be described in more detail later.

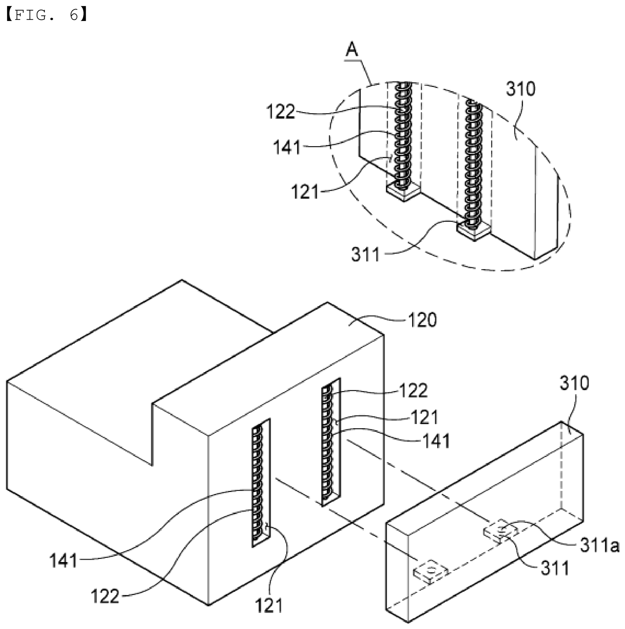

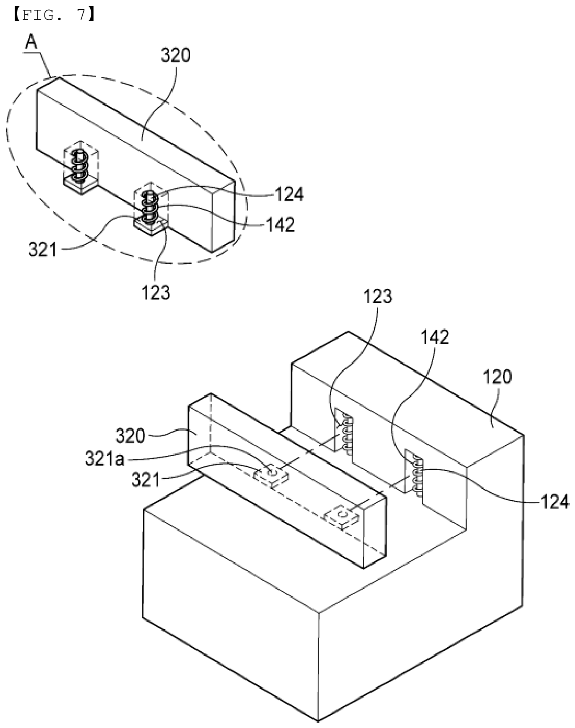

Meanwhile, FIG. 6 is a perspective view illustrating the lower sealing tool and a first lower pressing member in the apparatus for sealing the pouch-shaped secondary battery case according to the first embodiment of the present invention, and FIG. 7 is a perspective view illustrating the lower sealing tool and a second lower pressing member in the apparatus for sealing the pouch-shaped secondary battery case according to the first embodiment of the present invention.

Referring to FIGs. 3, 6, and 7, the lower pressing unit 300 may be located in front or at the rear of the lower sealing tool 120. When the front is defined as 3 o'clock direction and the rear is defined as 9 o'clock direction in FIG. 3, the lower pressing unit 300 may include a first lower pressing member 310 located in front of the lower sealing tool 120 and a second lower pressing member 320 located at the rear of the lower sealing tool 120.

First, the first lower pressing member 310 may be disposed at the position corresponding to the first upper pressing member 210. For example, the first lower pressing member 310 and the first upper pressing member 210 may be disposed at the positions corresponding to each other such that, when moved to press the sealed portion 11a, the first lower pressing member and the first upper pressing member apply pressure to the sealed portion 11a upward and downward, respectively.

In addition, the first lower pressing member 310 is connected to the front of the lower sealing tool 120, and may be configured to press the sealed portion 11a ahead of the lower sealing tool 120 when the lower sealing tool 120 is moved upward. For example, the first lower pressing member 310 may be configured such that an upper surface of the first lower pressing member 310 is located higher than an upper surface of the lower sealing tool 120. In other words, the upper surface of the first lower pressing member 310 may be located closer to a lower surface of the sealed portion 11a than the upper surface of the lower sealing tool 120.

In addition, the lower sealing tool 120 may include a third space portion 121 and a third guide rod 122. For example, the third space portion 121 may be a groove formed in a front surface of the lower sealing tool 120 in the upward-downward direction. Illustratively, the third guide rod 122 may be disposed in the third space portion 121 so as to extend in the upward-downward direction, and may be configured as a straight member. For example, the third guide rod 122 may be in the form of a straight rod or bar.

In addition, the first lower pressing member 310 may include a third extension piece 311. For example, the third extension piece 311 may be formed as the result of a part of an upper surface of the first lower pressing member 310 protruding and extending rearward, and the third extension piece 311 may be provided with a third hole 311a having a size that allows the third guide rod 122 of the lower sealing tool 120 to extend therethrough.

In addition, the third extension piece 311 of the first lower pressing member 310 may be configured to have a size that can be inserted into the third space portion 121 of the lower sealing tool 120. In addition, the third extension piece 311 of the first lower pressing member 310 and the third space portion 121 of the lower sealing tool 120 may be provided at positions corresponding to each other, and accordingly, the third guide rod 122 and the third hole 311a may also be provided at positions corresponding to each other.

In addition, the third hole 311a of the first lower pressing member 310 may be linearly movably engaged with or male-female coupled to the third guide rod 122 of the lower sealing tool 120. Accordingly, the first lower pressing member 310 may be reciprocated within a linear movement section guided by the third guide rod 122.

In addition, the sealing tool 100 may include a lower elastic unit 140, wherein the lower elastic unit 140 may include a third elastic member 141 interposed between the lower sealing tool 120 and the first lower pressing member 310. For example, the third elastic member 141 may be a spring member; however, the present invention is not limited thereto.

Illustratively, the third elastic member 141 may be provided relative to the third guide rod 122. For example, the third elastic member 141 may be configured to wrap around the third guide rod 122 to apply elastic restoring force to the first lower pressing member 310 that is linearly moved along the third guide rod 122. This will be described in more detail later.

Next, the second lower pressing member 320 disposed at the rear of the lower sealing tool 120 may be disposed at the position corresponding to the second upper pressing member 220. For example, the second lower pressing member 320 and the second upper pressing member 220 may be disposed at the positions corresponding to each other such that, when moved to press the sealed portion 11a, the second lower pressing member and the second upper pressing member apply pressure to the sealed portion 11a upward and downward, respectively.

In addition, the second lower pressing member 320 of the lower pressing unit 300 may be configured to press the sealed portion 11a ahead of the lower sealing tool 120 when the lower sealing tool 120 is moved upward.
For example, the second lower pressing member 320 may be configured such that an upper surface of the second lower pressing member 320 is located higher than the upper surface of the lower sealing tool 120. In other words, the upper surface of the second lower pressing member 320 may be located closer to the lower surface of the sealed portion 11a than the upper surface of the lower sealing tool 120.

In addition, the lower sealing tool 120 may include a fourth space portion 123 and a fourth guide rod 124. For example, the fourth space portion 123 may be a groove formed in a rear surface of the lower sealing tool 120 in the upward-downward direction. Illustratively, the fourth guide rod 124 may be disposed in the fourth space portion 123 so as to extend in the upward-downward direction, and may be configured as a straight member. For example, the fourth guide rod 124 may be in the form of a straight rod or bar.

In addition, the second lower pressing member 320 may include a fourth extension piece 321. For example, the fourth extension piece 321 may be formed as the result of a part of the upper surface of the second lower pressing member 320 protruding and extending forward, and the fourth extension piece 321 may be provided with a fourth hole 321a having a size that allows the fourth guide rod 124 of the lower sealing tool 120 to extend therethrough.

In addition, the fourth extension piece 321 of the second lower pressing member 320 may be configured to have a size that can be inserted into the fourth space portion 123 of the lower sealing tool 120. In addition, the fourth extension piece 321 of the second lower pressing member 320 and the fourth space portion 123 of the lower sealing tool 120 may be provided at positions corresponding to each other, and accordingly, the fourth guide rod 124 and the fourth hole 321a may also be provided at positions corresponding to each other.

In addition, the fourth hole 321a of the second lower pressing member 320 may be linearly movably engaged with or male-female coupled to the fourth guide rod 124 of the lower sealing tool 120. Accordingly, the second lower pressing member 320 may be reciprocated within a linear movement section guided by the fourth guide rod 124.

In addition, the lower elastic unit 140 may include a fourth elastic member 142 interposed between the lower sealing tool 120 and the second lower pressing member 320. For example, the fourth elastic member 142 may be a spring member; however, the present invention is not limited thereto.

Illustratively, the fourth elastic member 142 may be provided relative to the fourth guide rod 124. For example, the fourth elastic member 142 may be configured to wrap around the fourth guide rod 124 to apply elastic restoring force to the second lower pressing member 320 that is linearly moved along the fourth guide rod 124.

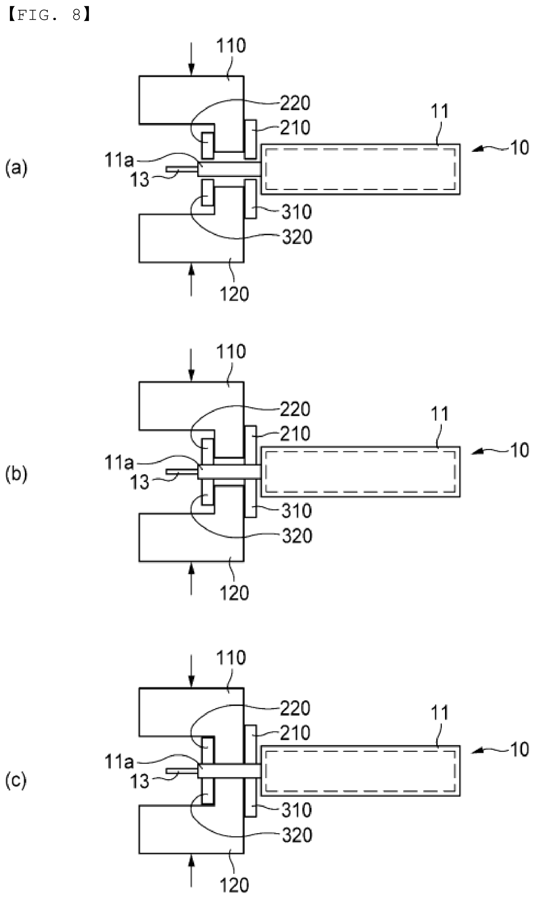

FIG. 8 is a schematic flowchart illustrating the operation during a sealing process of the apparatus for sealing the pouch-shaped secondary battery case according to the first embodiment of the present invention. Referring to FIG. 8, the method of sealing the pouch-shaped secondary battery case using the sealing apparatus includes (S1) locating a sealed portion 11a of the pouch-shaped secondary battery case between the upper sealing tool 110 and the lower sealing tool 120, (S2) moving the upper sealing tool 110 and the lower sealing tool 120 in directions facing each other, (S3) pressing the sealed portion 11a using the upper pressing unit 200 provided at the upper sealing tool 110 and the lower pressing unit 300 provided at the lower sealing tool 120, and (S4) pressing and heating the sealed portion 11a to seal the sealed portion 11a using the upper sealing tool 110 and the lower sealing tool 120.

First, step S1 is a step of locating a sealed portion 11a of the secondary battery case in the state in which an electrode assembly 12 is received in the battery case 11 and an electrode lead 13 is exposed to the outside between the upper sealing tool 110 and the lower sealing tool 120 (FIG. 8a).

In step S2, the upper sealing tool 110 is moved downward from the upper side, and the lower sealing tool 120 is moved upward from the lower side. At this time, the upper pressing unit 200 may be coupled to the upper sealing tool 110 so as to be moved downward along with the upper sealing tool 110, and the lower pressing unit 300 may be coupled to the lower sealing tool 120 so as to be moved upward along with the lower sealing tool 120 (FIG. 8b).

Specifically, when the upper pressing unit 200 comes into contact with the sealed portion 11a while being moved downward by the upper sealing tool 110, the upper pressing unit presses the sealed portion 11a downward, and when the lower pressing unit 300 comes into contact with the sealed portion 11a while being moved upward by the lower sealing tool 120, the lower pressing unit presses the sealed portion 11a upward, whereby downward pressure and upward pressure may be applied to the sealed portion 11a by the upper pressing unit 200 and the lower pressing unit 300, respectively.

In steps S3 and S4, when the upper pressing unit 200 and the lower pressing unit 300 apply downward pressure and upward pressure to the sealed portion 11a, respectively, the upper sealing tool 110 and the lower sealing tool 120 are moved until the upper sealing tool and the lower sealing tool come into contact with the sealed portion 11a, and after contact with the sealed portion 11a, the upper sealing tool and the lower sealing tool may apply pressure and heat to the sealed portion 11a downward and upward, respectively, to seal the sealed portion 11a (FIG. 8c).

The sealing method may further include (S5) moving the upper sealing tool 110 and the lower sealing tool 120 to the initial positions thereof.

As described above, in the method of sealing the pouch-shaped secondary battery case according to the first embodiment of the present invention, the sealed portion 11a of the pouch-shaped secondary battery case 10 is pressed in advance using the upper pressing unit 200 provided at the upper sealing tool 110 and the lower pressing unit 300 provided at the lower sealing tool 120, whereby wrinkles generated in the sealed portion 11a may be minimized.

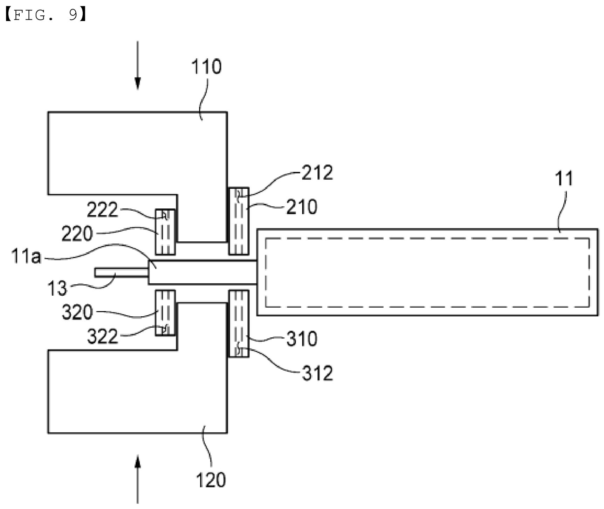

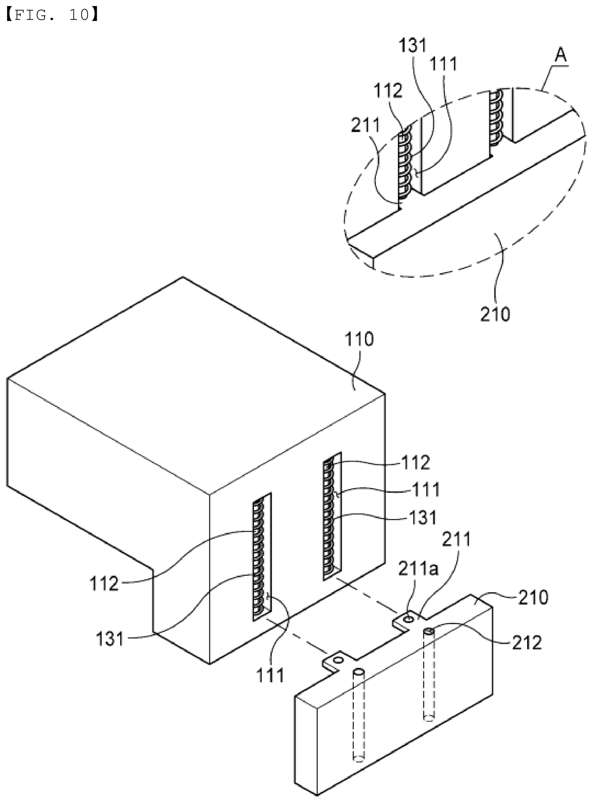

FIG. 9 is a conceptual view illustrating an apparatus for sealing a pouch-shaped secondary battery case according to a second embodiment of the present invention, and FIG. 10 is a perspective view illustrating an upper sealing tool and a first upper pressing member in the apparatus for sealing the pouch-shaped secondary battery case according to the second embodiment of the present invention.

The apparatus for sealing the pouch-shaped secondary battery case according to the second embodiment of the present invention is identical to the sealing apparatus according to the first embodiment except that a passage for blowing air toward the sealed portion 11a is further provided in at least one of the upper pressing unit and the lower pressing unit.

The apparatus for sealing the pouch-shaped secondary battery case according to the second embodiment of the present invention may blow air toward the sealed portion 11a before the upper pressing unit 200 and the lower pressing unit 300 press the sealed portion 11a, whereby it is possible to remove sealing wrinkles and foreign matter attached to the sealed portion 11a that may occur during the sealing process.

Specifically, the first upper pressing member 210 may be provided with a first passage 212 through which air blown from an air blowing unit (not shown) passes. For example, the first passage 212 may be a passage formed through the first upper pressing member 210 from the upper surface to the lower surface of the first upper pressing member. This allows air that has passed through the first passage 212 to be delivered to the sealed portion 11a when the air blowing unit provided at the upper side of the first upper pressing member 210 blows air from the upper side of the first upper pressing member 210 toward the sealed portion 11a.

In addition, the second upper pressing member 220 may be provided with a second passage 222 through which air blown from the air blowing unit (not shown) passes. For example, the second passage 222 may be a passage formed through the second upper pressing member 220 from the upper surface to the lower surface of the second upper pressing member. This allows air that has passed through the second passage 222 to be delivered to the sealed portion 11a when the air blowing unit provided at the upper side of the second upper pressing member 220 blows air from the upper side of the second upper pressing member 220 toward the sealed portion 11a.

In addition, the first lower pressing member 310 may be provided with a third passage 312 through which air blown from the air blowing unit (not shown) passes. For example, the third passage 312 may be a passage formed through the first lower pressing member 310 from the lower surface to the upper surface of the first lower pressing member. This allows air that has passed through the third passage 312 to be delivered to the sealed portion 11a when the air blowing unit provided at the lower side of the first lower pressing member 310 blows air from the lower side of the first lower pressing member 310 toward the sealed portion 11a.

In addition, the second lower pressing member 320 may be provided with a fourth passage 322 through which air blown from the air blowing unit passes. For example, the fourth passage 322 may be a passage formed through the second lower pressing member 320 from the lower surface to the upper surface of the second lower pressing member. This allows air that has passed through the fourth passage 322 to be delivered to the sealed portion 11a when the air blowing unit provided at the lower side of the second lower pressing member 320 blows air from the lower side of the second lower pressing member 320 toward the sealed portion 11a.

Meanwhile, although not specifically shown in the figure, the air blowing unit may be provided in the form of a tube connected to the passage; however, the present invention is not limited thereto. The air blowing unit may be provided through various technologies that are known to those skilled in the art, and therefore a detailed description thereof will be omitted.

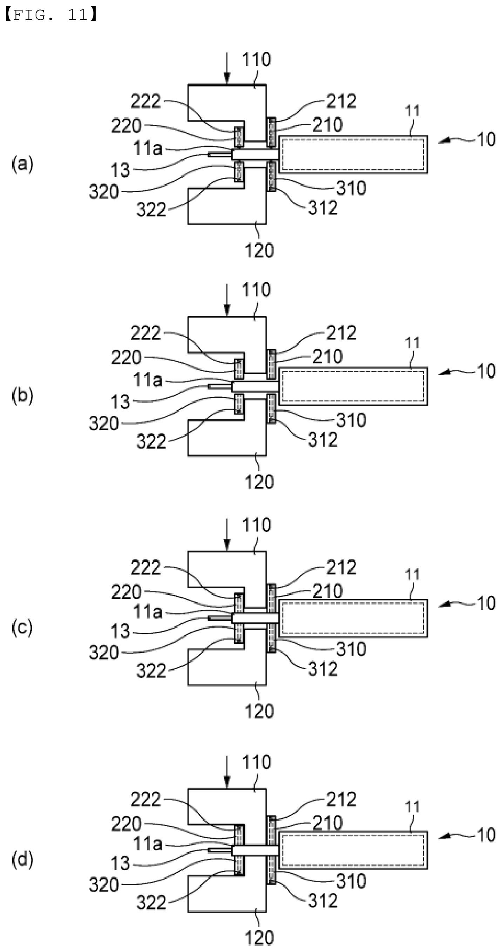

FIG. 11 is a schematic flowchart illustrating the operation during a sealing process of the apparatus for sealing the pouch-shaped secondary battery case according to the second embodiment of the present invention.

Referring to FIG. 11, the method of sealing the pouch-shaped secondary battery case according to the second embodiment may further include blowing air toward the sealed portion 11a through the passage formed in the upper pressing unit 200 or the lower pressing unit 300 between (S1) locating a sealed portion 11a of the pouch-shaped secondary battery case between the upper sealing tool 110 and the lower sealing tool 120 and (S2) moving the upper sealing tool 110 and the lower sealing tool 120 in directions facing each other.

In other words, before the upper sealing tool 110 and the lower sealing tool 120 are moved in directions facing each other, air may be blown toward the sealed portion 11a through the passage formed in the upper pressing unit 200 or the lower pressing unit 300.

In addition, the sealing method may further include blowing air toward the sealed portion 11a through the passage formed in the upper pressing unit 200 or the lower pressing unit 300 between (S2) moving the upper sealing tool 110 and the lower sealing tool 120 in directions facing each other and (S3) pressing the sealed portion 11a using the upper pressing unit 200 provided at the upper sealing tool 110 and the lower pressing unit 300 provided at the lower sealing tool 120.

In other words, before the upper pressing unit 200 and the lower pressing unit 300 press the sealed portion 11a, air may be blown toward the sealed portion 11a through the passage formed in the upper pressing unit 200 or the lower pressing unit 300.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

| | | | |
|---|---|---|---|
| 10: | Secondary battery | | |
| 11: | Battery case | 11a: | Sealed portion |
| 12: | Electrode assembly | 13: | Electrode lead |
| 100: | Sealing tool | | |
| 110: | Upper sealing tool | | |
| 111: | First Space portion | 112: | First guide rod |
| 113: | Second space portion | 114: | Second guide rod |
| 120: | Lower sealing tool | | |
| 121: | Third space portion | 122: | Third guide rod |
| 123: | Fourth space portion | 124: | Fourth guide rod |
| 130: | Upper elastic unit | | |
| 131: | First elastic member | 132: | Second elastic member |
| 140: | Lower elastic unit | | |
| 141: | Third elastic member | 142: | Fourth elastic member |
| 200: | Upper pressing unit | | |
| 210: | First upper pressing member | | |
| 211: | First extension piece | 211a: | First hole |
| 212: | First passage | | |
| 220: | Second upper pressing member | | |
| 221: | Second extension piece | 221a: | Second hole |
| 222: | Second passage | | |
| 300: | Lower pressing unit | | |
| 310: | First lower pressing member | | |
| 311: | Third extension piece | 311a: | Third hole |
| 312: | Third passage | | |
| 320: | Second lower pressing member | | |
| 321: | Fourth extension piece | 321a: | Fourth hole |
| 322: | Fourth passage | | |

## Claims

1. An apparatus for sealing a pouch-shaped secondary battery case, the apparatus comprising:
a sealing tool comprising an upper sealing tool and a lower sealing tool configured to be disposed in contact with each other in a state in which a sealed portion of the pouch-shaped secondary battery case is located therebetween in order to press and heat the sealed portion such that the sealed portion is sealed;
an upper pressing unit located in front of or at a rear of the upper sealing tool; and
a lower pressing unit located in front of or at a rear of the lower sealing tool.

2. The apparatus according to claim 1, wherein the upper pressing unit comprises a first upper pressing member located in front of the upper sealing tool, the first upper pressing member being configured to press the sealed portion ahead of the upper sealing tool when the upper sealing tool is moved downward.

3. The apparatus according to claim 2, wherein the lower pressing unit comprises a first lower pressing member located in front of the lower sealing tool, the first lower pressing member being configured to press the sealed portion ahead of the lower sealing tool when the lower sealing tool is moved upward.

4. The apparatus according to claim 3, wherein
the upper pressing unit comprises a second upper pressing member located at the rear of the upper sealing tool, the second upper pressing member being configured to press the sealed portion ahead of the upper sealing tool when the upper sealing tool is moved downward, and
the lower pressing unit comprises a second lower pressing member located at the rear of the lower sealing tool, the second lower pressing member being configured to press the sealed portion ahead of the lower sealing tool when the lower sealing tool is moved upward.

5. The apparatus according to claim 3, further comprising:
an air blowing unit configured to blow air toward the sealed portion, wherein
the first upper pressing member comprises a first passage configured to allow air blown from the air blowing unit to pass therethrough, and
the first lower pressing member comprises a third passage configured to allow air blown from the air blowing unit to pass therethrough.

6. The apparatus according to claim 4, further comprising:
an air blowing unit configured to blow air toward the sealed portion, wherein
the second upper pressing member comprises a second passage configured to allow air blown from the air blowing unit to pass therethrough, and
the second lower pressing member comprises a fourth passage configured to allow air blown from the air blowing unit to pass therethrough.

7. The apparatus according to claim 1, wherein the sealing tool comprises an upper elastic unit constituted by a first elastic member interposed between the upper sealing tool and the first upper pressing member or a second elastic member interposed between the upper sealing tool and the second upper pressing member.

8. The apparatus according to claim 7, wherein, the upper elastic unit is configured to apply an elastic restoring force between the upper sealing tool and the upper pressing unit when a lower surface of the upper sealing tool is moved to a position corresponding to a lower surface of the upper pressing unit in an initial state in which the lower surface of the upper sealing tool is located higher than the lower surface of the upper pressing unit.

9. The apparatus according to claim 1, wherein the sealing tool comprises a lower elastic unit constituted by a third elastic member interposed between the lower sealing tool and the first lower pressing member or a fourth elastic member interposed between the lower sealing tool and the second lower pressing member.

10. The apparatus according to claim 9, wherein, the lower elastic unit is configured to apply an elastic restoring force between the lower sealing tool and the lower pressing unit when an upper surface of the lower sealing tool is moved to a position corresponding to an upper surface of the lower pressing unit in an initial state in which the upper surface of the lower sealing tool is located lower than the upper surface of the lower pressing unit.

11. A method of sealing a pouch-shaped secondary battery case using the apparatus according to any one of claims 1 to 10, the method comprising:
(S1) locating a sealed portion of the pouch-shaped secondary battery case between the upper sealing tool and the lower sealing tool;
(S2) moving the upper sealing tool and the lower sealing tool in directions facing each other;
(S3) pressing the sealed portion using the upper pressing unit provided at the upper sealing tool and the lower pressing unit provided at the lower sealing tool; and
(S4) pressing and heating the sealed portion to seal the sealed portion using the upper sealing tool and the lower sealing tool.

12. The method according to claim 11, further comprising (S5) moving the upper sealing tool and the lower sealing tool to initial positions thereof after step S4.

13. The method according to claim 12, wherein, in step S5,
the upper pressing unit is moved to the initial position thereof by an elastic restoring force of the upper elastic unit interposed between the upper sealing tool and the upper pressing unit, and
the lower pressing unit is moved to the initial position thereof by an elastic restoring force of the lower elastic unit interposed between the lower sealing tool and the lower pressing unit.

14. The method according to claim 11, further comprising blowing air toward the sealed portion through the passage formed in the upper pressing unit or the lower pressing unit between step S1 and step S2.

15. The method according to claim 11, further comprising blowing air toward the sealed portion through the passage formed in the upper pressing unit or the lower pressing unit between step S2 and step S3.
